# EUROPÄISCHE PATENTSCHRIFT

(11) **EP 0 616 087 B1**
(45) Veröffentlichungstag und Bekanntmachung des Hinweises auf die Patenterteilung: **15.05.1996**
(21) Anmeldenummer: 94101163.7
(22) Anmeldetag: 27.01.1994
(51) Int. Cl.: E03F 7/10, B60P 3/22, F04B 49/00

(54) **Kommunalfahrzeug mit Druckregelventil**
Communal vehicle with pressure regulating valve
Véhicule communal avec soupape de régulation de pression

(30) Priorität: 13.03.1993 DE 4307984
(43) Veröffentlichungstag der Anmeldung: 21.09.1994
(73) Patentinhaber: Herm. J. Hellmers GmbH, D-22113 Hamburg (DE)
(72) Erfinder: Schramek, Otto, D-88441 Mittelbiberach (DE)
(74) Vertreter: Niedmers, Ole, Dipl.-Phys.

(56) Entgegenhaltungen:
- EP-A- 0 291 829
- DE-A- 3 140 200
- FR-A- 2 454 002

## Beschreibung

Die Erfindung betrifft ein Kommunalfahrzeug zum Spülen und Reinigen von Kanälen und Behältern oder dergleichen, umfassend einen Behälter mit einem Schlammabteil und einem Brauchwasserabteil, wobei das Brauchwasserabteil mit einem Spülschlauch verbinden ist, sowie eine Pumpeneinrichtung, die Wasser zum mit einem Düsenkopf versehbaren Ende des Spülschlauches fördert.

Ein Kommunalfahrzeug dieser Art, das die obengenannten Merkmale des Oberbegriffs des Anspruchs 1 aufweist, ist aus der DE-A-31 40 200 bekannt und wird üblicherweise zum Reinigen und Spülen von Kanalrohren benutzt, wobei der Schmutz aus den Kanalrohren mittels des Fahrzeugs abgesaugt und abtransportiert wird. Dabei wird in der Regel zur Verminderung des Wasserbedarfs derartiger Fahrzeuge anstelle von Trinkwasser das abgesaugte Schmutzwasser, gegebenenfalls nach einer fahrzeugintern erfolgten Vorreinigung, wieder zum Spülen des Kanals oder dergleichen verwendet.

Aus der FR-A-2 454 002 ist eine Vorrichtung bekannt, bei der mittels einer Pumpe über einen Förderschlauch Wasser zur Reinigung einer Kanalisation oder dergleichen gefördert werden kann.

Um ein Beschädigen oder Zerstören der Pumpeneinrichtung während der bestimmungsgemäßen Funktion zu vermeiden, hervorgerufen durch einen Druckanstieg des Wassers zwischen Pumpeneinrichtung und Düsenkopf, ist bisher der Pumpeneinrichtung nachgeschaltet ein Druckregelventil vorgesehen, das einen entsprechend einem vorwählbaren Druck mechanisch vorgespanntes Ventilteil aufweist, das entgegen der Vorspannung öffnet, wenn der Wasserdruck einen voreinstellbaren Druck an dieser Stelle überschreitet. Bei Drucküberschreitung tritt somit Wasser aus diesem Ventil aus.

Aufgrund gegebenenfalls falsch eingesetzter Düsenköpfe oder infolge einer zu hohen Antriebsleistung oder Antriebsdrehzahl des die Pumpe antreibenden Aggregats wird vielfach ein Druck zwischen der Pumpeneinrichtung und dem Düsenkopf am Ende des Spülschlauches aufgebaut, der höher als der voreinstellbare Druck in der Leitung bzw. im Spülschlauch ist, so daß das Druckregelventil auf vorbeschriebene Weise öffnet. Dabei tritt, bedingt durch das fließende Wasser , in dem Kieselsteine und dergl. enthalten sein können, ein starker Verschleiß auf. Dabei wird das Druckregelventil extrem belastet, so daß es zu einem sehr großen Verschleiß des Druckregelventils kommt und trotz sorgfältiger Werkstoffwahl der entsprechenden Elemente des Druckregelventils Standzeiten von nur wenigen Stunden des Druckregelventils erreicht werden. Demzufolge ist innerhalb ganz kurzer Zeit ein Austausch der betroffenen Ventilelemente im Druckregelventil erforderlich.

Es ist Aufgabe der vorliegenden Erfindung ein Kommunalfahrzeug mit Druckregelventil der eingangs genannten Art zu schaffen, bei dem im Vergleich zu den bisherigen Fahrzeugen dieser Art die Standzeit des Druckregelventils beträchtlich vergrößert ist, wobei dieses durch sehr einfache Mittel erreicht werden soll, die zwar dem rauhen Betrieb derartiger Fahrzeuge Rechnung tragen aber einfach bedienbar und kostengünstig herstellbar sein sollen, wobei auch auf einfache Weise eine Nachrüstung bisheriger Kommunalfahrzeuge ohne weiteres möglich sein soll.

Gelöst wird die Aufgabe gemäß der Erfindung durch einen über eine Druckfühlerleitung an eine Leitung zwischen Pumpeneinrichtung und einem dieser nachgeschalteten Druckregelventil angeschlossenen drucksensitiven Schalter, mit dem der Druck des Wassers zwischen der Pumpeneinrichtung und Druckregelventil erfaßbar ist und durch den bei einer Druckerhöhung über einen voreinstellbaren Druck des Wassers hinaus ein Stellglied zur Erniedrigung der Antriebsleistung des die Pumpeneinrichtung antreibenden Aggregats betätigbar ist.

Der Vorteil der erfindungsgemäßen Lösung besteht im wesentlichen darin, daß auf sehr einfache Weise das Druckregelventil vor Beschädigung infolge einer geringen Öffnung geschützt wird und das Druckregelventil nur noch dann öffnen muß, wenn der Druck tatsächlich real über dem voreinstellbaren Druck liegt. Eine erfindungsgemäß erreichte geringe Verminderung der Förderleistung der Pumpeneinrichtung durch geringfügige Verminderung der Antriebsleistung des die Pumpeneinrichtung antreibenden Aggregats, wie es durch die erfindungsgemäße Lösung vorgeschlagen wird, ist bezogen auf die Gesamtförderleistung der Pumpe ohne wirklichen Einfluß, so daß auf einfache Weise ein wirksamer Schutz der Pumpeneinrichtung erreicht wird und rechnergestützte Lösungen, beispielsweise mittels einer SPS-Steuerung, die einerseits sehr kostenintensiv und andererseits sehr bedienungsintensiv sind, vermieden werden.

Die Erfassung der Druckerhöhung in der Leitung zwischen Pumpeneinrichtung und Druckregelventil wird dadurch ausgeführt, daß der Druck des Wassers mittels eines drucksensitiven Schalters erfaßt wird, der den Vorteil einer robusten, einfachen und kostengünstigen Ausgestaltung aufweist.

Der drucksensitive Schalter kann grundsätzlich unmittelbar an der Leitung zwischen Pumpeneinrichtung und Druckregelventil vorgesehen sein, vorteilhaft ist es jedoch, daß dieser zwischen der Pumpeneinrichtung und dem Druckregelventil vorgesehen ist.

Zwischen der Pumpeneinrichtung und dem Druckregelventil ist eine Druckfühlerleitung vorgesehen, die mit dem Schalter verbunden ist. Auf diese Weise ist der Schalter abgesetzt von der Pumpeneinrichtung und vom Druckregelventil am Kommunalfahrzeug angebracht, wobei dadurch auch einer guten Zugänglichkeit des Schalters für Wartungs- und Reparaturzwecke Genüge getan ist. Im Zweifel kann das Kommunalfahrzeug bei Beschädigungen oder bei Nichtfunktionieren des Schalters, wenn auch in eingeschränkter Form, weiter im Einsatz bleiben, wenn dafür lediglich die Druckfühlerleitung durch ein darin vorsehbares Ventil verschlossen wird und der Schalter somit außer Kraft bzw. ausbaubar ist, ohne daß der übliche Betrieb des Kommunalfahrzeugs vollständig beeinträchtigt wird.

Gemäß einer vorteilhaften Ausgestaltung der Erfindung wird die Antriebsleistung der Pumpeneinrichtung durch Verringerung der Drehzahl des Aggregats erniedrigt, wobei ein Aggregat in diesem Falle ein hydraulisch, elektrisch oder mechanisch angetriebenes Aggregat (Dieselmotor) sein kann. Grundsätzlich ist es aber auch möglich, die Antriebsleistung der Pumpeneinrichtung durch ein stufenlos oder in Schaltstufen verstellbares Getriebe zu steuern, wobei dann die Drehzahl des Aggregats als solchem grundsätzlich konstant haltbar ist.

Der Schalter wirkt mit einem Stellglied zusammen, das mit dem Aggregat zur Erniedrigung von dessen Drehzahl zusammenwirkt. Dieses Stellglied kann beispielsweise auch vorteilhafterweise ein vom Schalter geschalteter Elektromotor sein, der seinerseits auf die Gaszugeinrichtung eines Dieselmotors wirkt, der die Pumpeneinrichtung antreibt. Grundsätzlich kann das Stellglied aber auch ein elektromagnetisches oder hydraulisches Stellglied sein, das ein Getriebe zum Antrieb der Pumpeneinrichtung schaltet, so daß auf diese Weise bei erfaßter Druckerhöhung die Pumpeneinrichtung in der Drehzahl vermindert wird.

Schließlich ist es vorteilhaft, daß das Druckregelventil einen Überlaufausgang aufweist, der mit dem Brauchwasserabteil des Behälters verbunden ist, d.h. daß auch bei einer bei dieser Ausgestaltung des Kommunalfahrzeugs nicht auszuschließenden Druckerhöhung über einen voreinstellbaren Druck des Wassers hinaus das dann aus dem Druckregelventil austretende Wasser wiederum in das Brauchwasserabteil des Behälters zurückgeführt wird.

Die Erfindung wird nun unter Bezugnahme auf die einzige schematische Zeichnung anhand eines Ausführungsbeispieles beschrieben. Diese zeigt:
einen schematischen, vertikalen Längsschnitt durch den Behälter des Kommunalfahrzeugs sowie einen an den Behälter angeschlossenen Spülschlauch für kaltes Wasser, wobei zwischen der Pumpeneinrichtung und dem Düsenkopf ein Druckregelventil nachgeschaltet ist und in die Leitung zwischen Pumpeneinrichtung und Druckregelventil ein drucksensitives Element geschaltet ist.

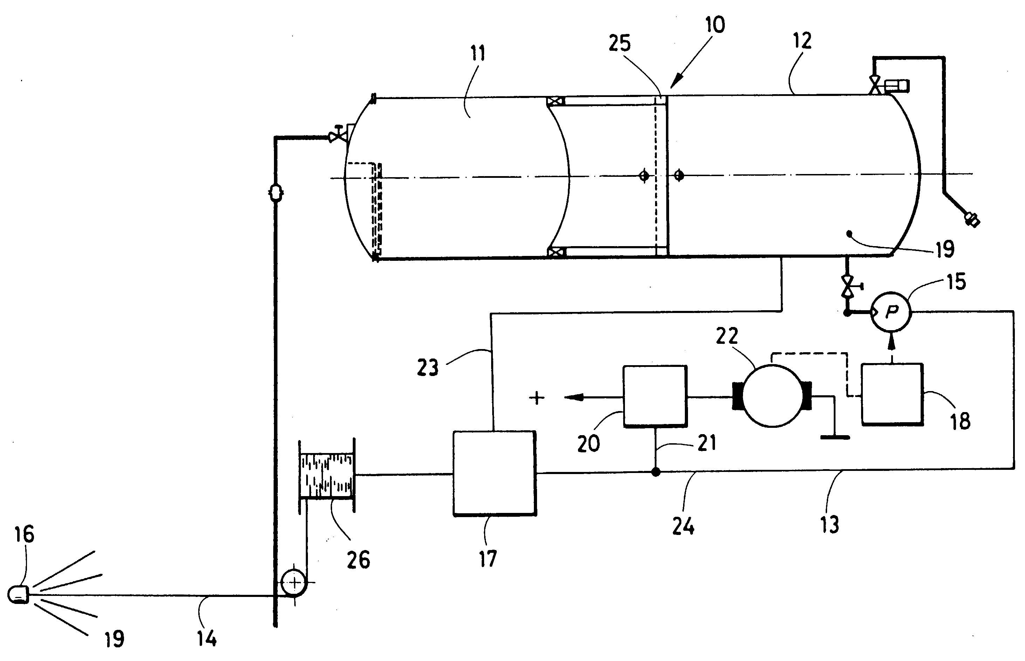

Das in der Zeichnung nur zum Teil dargestellte Fahrzeug besteht aus einem vom nicht dargestellten Fahrzeugchassis getragenen Behälter 10, der in ein Schlammabteil 11 und ein Brauchwasserabteil 12 unterteilt ist, wobei die Unterteilung der beiden Abteile 11, 12 im Behälter 10 durch einen Ausschubkolben 25 zur Einstellung variabler Abteilungsvolumina dient. Bezüglich des allgemeinen Aufbaus eines derartigen Kommunalfahrzeugs und seiner Funktionsweise wird grundsätzlich auf DE-A-31 40 220 verwiesen.

Durch eine Pumpeneinrichtung 15 wird der Austritt von kaltem bzw. sich auf Umgebungstemperatur befindendem Wasser 19 über die Leitung/Förderverbindung 13 zum Spülschlauch 14 bewirkt. Der Spülschlauch 14 ist an seinem freien Ende mit einem Düsenkopf 16 versehen, der auf an sich bekannte Weise zum Spülen und Reinigen von Kanälen und Behältern oder dergleichen dient. Zwischen dem Düsenkopf 16 und der Pumpeneinrichtung 15 ist ein Druckregelventil 17 vorgesehen, das bei Überschreiten eines voreinstellbaren Drucks des Wassers 19 in der Leitung 13 öffnet und somit den Druck des Wassers 19 in der Förderleitung vermindert. Über einen Überlaufausgang 23, der mit dem Brauchwasserabteil 12 des Behälters 10 verbunden ist, kann dann das aus dem Druckregelventil 17 austretende Wasser in den Behälter 10 zurückgeführt werden.

Zwischen der Pumpeneinrichtung 15 und dem Druckregelventil 17 ist über eine Druckfühlerleitung 21 ein drucksensitiver Schalter 20 geschaltet, der eine Druckerhöhung des voreinstellbaren Drucks des Wassers 19 in der Leitung 13 erkennt. Der Schalter 20 schaltet bei erfaßter Druckerhöhung ein Stellglied 22, im vorliegenden Falle in Form eines Elektromotors, ein, wobei der Elektromotor mit der Steuerung 8 eines Antriebsaggregats 18 verbunden ist, das die Pumpeneinrichtung 15 antreibt.

Wird ein über einem voreinstellbaren Druck des Wassers 19 liegender Druck in der Leitung 13 erkannt, wird somit über den drucksensitiven Schalter 20 und das Stellglied 22 das Aggregat 18 in seinem Antrieb geringfügig auf vorbestimmte Weise, d.h. in seiner Antriebsleistung bzw. Drehzahl erniedrigt, so daß demzufolge die Pumpeneinrichtung 15 mit einer geringeren Förderleistung arbeitet und somit der Druck in der Leitung 13 unterhalb des voreinstellbaren Drucks des Wassers 19 gehalten wird. Eine Druckerhöhung des Wassers in der Leitung 13, hervorgerufen beispielsweise durch eine Verstopfung oder eine falsche Auswahl des Düsenkopfes 6, hat demzufolge zunächst eine Erhöhung des Drucks in der Leitung 13 zwischen Pumpeneinrichtung 15 und Druckregelventil 17 zur Folge, wobei nachfolgend das Antriebsaggregat in der Drehzahl reduziert wird, so daß schließlich der Überdruck beseitigt wird. Das Druckregelventil 17 wird somit bestimmungsgemäß nur noch dann aktiv, wenn der Druck sich aufgrund von Fehlern und dergleichen beträchtlich über den voreinstellbaren Druck des Wassers erhöht.

Eine Verminderung der Antriebsleistung bzw. Drehzahl bei der hier beschriebenen erfindungsgemäßen Auslösefunktion hat für die Bedienungsperson des Fahrzeugs auch noch den positiven Effekt eines Hinweises, daß ein Fehler bzw. eine Störung der bestimmungsgemäßen Funktion des Kommunalfahrzeugs beim bestimmungsgemäßen Betrieb vorliegt.

### Bezugszeichenliste

- 10: Behälter
- 11: Schlammabteil
- 12: Brauchwasserabteil
- 13: Leitung/Förderverbindung
- 14: Spülschlauch
- 15: Pumpeneinrichtung
- 16: Düsenkopf
- 17: Druckregelventil
- 18: Aggregat
- 19: Wasser
- 20: Schalter
- 21: Druckfühlerleitung
- 22: Stellglied
- 23: Überlaufausgang
- 24:
- 25: Ausschubkolben
- 26: Schlauchhaspel

## Patentansprüche

1. Kommunalfahrzeug zum Spülen und Reinigen von Kanälen und Behältern oder dergleichen, umfassend einen Behälter (10) mit einem Schlammabteil (11) und einem Brauchwasserabteil (12), wobei das Brauchwasserabteil (12) mit einem Spülschlauch (14) verbunden ist, sowie eine Pumpeneinrichtung (15), die Wasser (19) zum mit einem Düsenkopf (16) versehbaren Ende des Spülschlauches (14) fördert, gekennzeichnet durch einen über eine Druckfühlerleitung (21) an eine Leitung (13) zwischen Pumpeneinrichtung (15) und einem dieser nachgeschalteten Druckregelventil (17) angeschlossenen drucksensitiven Schalter (20), mit dem der Druck des Wassers (19) zwischen der Pumpeneinrichtung (15) und Druckregelventil (17) erfaßbar ist und durch den bei einer Druckerhöhung über einen voreinstellbaren Druck des Wassers (19) hinaus ein Stellglied (22) zur Erniedrigung der Antriebsleistung des die Pumpeneinrichtung (15) antreibenden Aggregats (18) betätigbar ist.

2. Kommunalfahrzeug nach Anspruch 1, dadurch gekennzeichnet, daß die Antriebsleistung durch Verringerung der Drehzahl des Aggregats (18) erniedrigt wird.

3. Kommunalfahrzeug nach einem oder beiden der Ansprüche 1 oder 2, dadurch gekennzeichnet, daß das Stellglied (22) ein vom Schalter (20) geschalteter Elektromotor ist.

4. Kommunalfahrzeug nach einem oder mehreren der Ansprüche 1 bis 3, dadurch gekennzeichnet, daß das Druckregelventil (17) einen Überlaufausgang (23) aufweist, der mit dem Brauchwasserabteil (12) des Behälters (10) verbunden ist.

## Claims

1. Municipal vehicle for flushing and cleaning drains and tanks or similar objects, comprising a tank (10) with a sludge compartment (11) and a service water compartment (12), the latter being connected to a flushing hose (14), together with a pumping device (15) which pumps water (19) to the end of the flushing hose (14) which can be equipped with a nozzle head (16), characterized by a pressure-sensitive switch (20) connected via a pressure transducer line (21) to a line (13) between the pumping device (15) and its downstream pressure regulating valve (17), this switch being used to detect the pressure of the water (19) between the pumping device (15) and pressure regulating valve (17) and, should this pressure rise above a preadjustable level, to trigger an actuator (22) which reduces the power of the unit (18) driving the pumping device (15).

2. Municipal vehicle according to claim 1, characterized in that the driving power is reduced by lowering the speed of the power unit (18).

3. Municipal vehicle according to one or both of claims 1 and 2, characterized in that the actuator (22) consists of an electric motor controlled by the switch (20).

4. Municipal vehicle according to one or more of claims 1 to 3, characterized in that the pressure regulating valve (17) has an overflow outlet (23) which is connected to the service water compartment (12) of the tank (10).

## Revendications

1. Véhicule communal pour le lavage et le nettoyage de canaux et de réservoirs ou analogue, incluant un réservoir (10) comprenant un compartiment pour les déchets solides (11) et un compartiment pour l'eau industrielle (12), le compartiment pour l'eau industrielle (12) étant relié à un tuyau de lavage (14), ainsi qu'à un dispositif de pompage (15) qui envoie de l'eau (19) jusqu'à l'extrémité du tuyau de lavage (14), qui est susceptible d'être pourvu d'une tête en forme de tuyère (16), caractérisé par un commutateur (20) sensible à la pression, relié par l'intermédiaire d'une conduite incluant un capteur de pression (21), à une conduite (13) entre le dispositif de pompage (15) et une soupape de régulation de pression (17) branchée en série avec ce dernier, commutateur grâce auquel la pression de l'eau (19) entre le dispositif de pompage (15) et la soupape de régulation de pression (17) peut être détectée, et par l'intermédiaire duquel un vérin (22) peut être actionné, pour la diminution de la puissance de propulsion du propulseur (18) agissant sur le dispositif de pompage (15), dans le cas d'une surpression supérieure à une pression prédéterminée de l'eau (19).

2. Véhicule communal selon la revendication 1, caractérisé en ce que la puissance de propulsion peut être diminuée en baissant la vitesse de rotation du propulseur (18).

3. Véhicule communal selon l'une ou deux des revendications 1 ou 2, caractérisé en ce que le vérin (22) est un moteur électrique branché au commutateur (20).

4. Véhicule communal selon l'une ou plusieurs des revendications 1 à 3, caractérisé en ce que la soupape de régulation de pression (17) comporte une sortie de trop-plein (23), qui est reliée au compartiment d'eau industrielle (12) du réservoir (10).
